(19) Europäisches Patentamt
European Patent Office
Office européen des brevets

(11) Veröffentlichungsnummer: **0 030 618**
**B1**

(12) # EUROPÄISCHE PATENTSCHRIFT

(45) Veröffentlichungstag der Patentschrift: **12.10.83**

(51) Int. Cl.³: **C 08 L 67/02**

(21) Anmeldenummer: **80106827.1**

(22) Anmeldetag: **06.11.80**

(54) **Flammwidrige Formmassen auf Basis von Polyethylenterephthalat, Verfahren zu ihrer Herstellung und ihre Verwendung zur Herstellung von Formkörpern.**

(30) Priorität: **19.11.79 US 95273**

(43) Veröffentlichungstag der Anmeldung: **24.06.81 Patentblatt 81/25**

(45) Bekanntmachung des Hinweises auf die Patenterteilung: **12.10.83 Patentblatt 83/41**

(84) Benannte Vertragsstaaten: **CH DE FR GB IT LI NL SE**

(56) Entgegenhaltungen:
**FR-A-2 285 435**
**FR-A-2 354 370**
**FR-A-2 376 181**
**GB-A-1 287 934**
**US-A-3 624 024**
**US-A-3 873 567**

**CHEMICAL ABSTRACTS, Band 84, Nr. 6, veröffentlicht am 9. Februar 1976, Zusammenfassung Nr. 31.9939, Seite 38, COLUMBUS, OHIO (US)**

**Die Akte enthält technische Angaben, die nach dem Eingang der Anmeldung eingereicht wurden und die nicht in dieser Patentschrift enthalten sind.**

(73) Patentinhaber: **BAYER AG, Zentralbereich Patente, Marken und Lizenzen, D-5090 Leverkusen 1, Bayerwerk (DE)**

(72) Erfinder: **Bier, Peter, Dr., Bodelschwinghstrasse 18, D-4150 Krefeld 1 (DE)**

EP 0 030 618 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

# Flammwidrige Formmassen auf Basis von Polyethylenterephthalat, Verfahren zu ihrer Herstellung und ihre Verwendung zur Herstellung von Formkörpern

Die Erfindung betrifft flammwidrige Formmassen auf Basis von Polyethylenterephthalat (PET), einem Flammschutzmittel, einem Pfropfpolymerisat und gegebenenfalls Verstärkungsmitteln, ein Verfahren zur Herstellung dieser Formmassen durch Homogenisieren in der Schmelze und die Verwendung dieser Formmassen zur Herstellung von Formkörpern.

Es besteht ein Bedürfnis nach PET-Formmassen, die flammwidrig sind und im Brandfalle nicht tropfen. Insbesondere sollten diese PET-Formmassen ein Brandverhalten V0 gemäss der Prüfnorm von Underwriters' Laboratories, Bedingung UL-94 5V, aufweisen.

Überraschenderweise wurde gefunden, dass flammwidrige PET-Formmassen dann ein aussergewöhnlich günstiges Brandverhalten aufweisen, wenn sie ein PET eines bestimmten Viskositätsbereichs, ein Flammschutzmittel, ein bestimmtes Pfropfpolymerisat und gegebenenfalls Verstärkungsmittel enthalten.

Gegenstand der Erfindung sind also flammwidrige thermoplastische Polyethylenteraphthalat-Formmassen enthaltend

I. 40 bis 95, vorzugsweise 50 bis 65, Gew.-Teile eines Polyethylenterephthalats mit einer relativen Viskosität [gemessen in Phenol/o-Dichlorbenzol (Gewichtsverhältnis 60 : 40) bei 25°C] von 1,28 bis 1,38,

II. 3 bis 20, vorzugsweise 5 bis 15, Gew.-Teile eines Flammschutzmittels,

III. 2 bis 20 Gew.-Teile eines Pfropfpolymerisats aus

(A) 25 bis 95 Gew.-Teilen eines Copolymerisats von

(a) 75 bis 99,8 Gew.-Teilen eines $C_1$-$C_6$-Alkylacrylats,

(b) 0,1 bis 5 Gew.-Teilen eines Monomeren mit mindestens 2 nicht konjugierten olefinischen Doppelbindungen und

(c) bis zu 40 Gew.-Teilen weiterer copolymerisierbarer Monomerer,

als Propfgrundlage und

(B) 75 bis 5 Gew.-Teilen eines durch Polymerisation mindestens eines olefinisch ungesättigten Monomeren erhaltenen Harzes, das in Gegenwart von (A) hergestellt worden ist, und

IV. 0 bis 300 Gew.-Teile Füll- und/oder Verstärkungsmittel.

Weiterer Gegenstand der Erfindung ist ein Verfahren zur Herstellung dieser PET-Formmassen durch Homogenisieren der Komponenten I bis IV in der Schmelze.

Ein weiterer Gegenstand der Erfindung ist die Verwendung dieser PET-Formmassen zur Herstellung von Formkörpern, insbesondere von Spritzgussartikeln.

Die Polyethylenterephthalate (I) enthalten mindestens 80, vorzugsweise mindestens 90, Mol-%, bezogen auf die Dicarbonsäurekomponente, Terephthalsäurereste und mindestens 80, vorzugsweise mindestens 90, Mol-%, bezogen auf die Diolkomponente, Ethylenglykolreste.

Die Polyethylenterephthalate (I) können neben Terephthalsäureresten bis zu 20 Mol-% Reste anderer aromatischer Dicarbonsäuren mit 6 bis 14 C-Atomen, aliphatischer Dicarbonsäuren mit 4 bis 8 C-Atomen oder cycloaliphatischer Dicarbonsäuren mit 8 bis 12 C-Atomen enthalten, wie z.B. Phthalsäure, Isophthalsäure, Naphthalin-2,6-dicarbonsäure, Diphenyl-4,4-dicarbonsäure, Adipinsäure, Sebacinsäure, Cyclohexandiessigsäure.

Die Polyethylenterephthalate I können neben Ethylenglykolresten bis zu 20 Mol-% anderer aliphatischer Diole mit 3 bis 12 C-Atomen, cycloaliphatischer Diole mit 6 bis 15 C-Atomen und/oder aromatischer Diole mit 6 bis 21 C-Atomen enthalten, z.B. Reste von Propan-1,3-diol, Butan-1,4-diol, Pentan-1,5-diol, Hexan-1,6-diol, Cyclohexan-1,4-dimethanol, 3-Methylpentandiol-2,4, 2-Methylpentandiol-2,4, 2,2,4-Trimethylpentandiol-1,3, 2-Ethylhexandiol-1,3, 2,2-Diethylpropandiol-1,3, Hexandiol-2,5, 1,4-Di-(β-hydroxiethoxi)-benzol, 2,2-Bis-(4-hydroxicyclohexyl)-propan, 2,4-Dihydroxi-1,1,3,3-tetramethylcyclobutan, 2,2-Bis-(3-β-hydroxiethoxiphenyl)-propan und 2,2-Bis-(4-hydroxipropoxiphenyl)-propan.

Die Polyethylenterephthalate I können durch Einbau relativ kleiner Mengen von 3- oder 4wertigen Alkoholen oder 3- oder 4basischen Carbonsäuren, wie sie in der DE-OS 1 900 270 und der US-PS 3 692 744 beschrieben sind, verzweigt werden. Beispiele bevorzugter Verzweigungsmittel sind Trimesinsäure, Trimellithsäure, Trimethylolethan und -propan und Pentaerythrit. Es ist ratsam, nicht mehr als 1 Mol-% des Verzweigungsmittels, bezogen auf die Säurekomponente, zu verwenden.

Besonders bevorzugt sind Polyethylenterephthalate I, die allein aus Terephthalsäure oder deren reaktionsfähigen Derivaten (z.B. deren Dialkylestern oder Anhydriden) und Ethylenglykol hergestellt worden sind.

Die für die erfindungsgemässen Formmassen bevorzugten Flammschutzmittel II umfassen eine Vielzahl chemischer Verbindungen, die dem Fachmann gut bekannt sind. Allgemein enthalten sie chemische Elemente, die wegen ihrer entflammungshemmenden Fähigkeit verwendet werden, z.B. Brom, Chlor, Antimon, Phosphor und Stickstoff (vgl. z.B. US-PS 4 136 089). Vorzugsweise bestehen die Flammschutzmittel II aus halogenierten organischen Verbindungen (bromiert oder chloriert), gegebenenfalls im Gemisch mit organischen oder anorganischen Antimonverbindungen, z.B. Antimontrioxid; aus elementarem Phosphor oder Phosphorverbindungen; aus halogenhaltigen Verbindungen im Gemisch mit Phosphorverbindungen oder Verbindungen, die Phosphor-Stickstoff-Bindungen enthalten.

Bevorzugte halogenierte Flammschutzmittel II sind solche der Formel

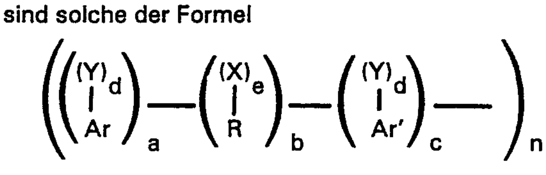

worin

n eine ganze Zahl von 1 bis 10 und

R ein Alkylen- oder Alkylidenrest mit 1 bis 20 C-Atomen oder ein Cycloalkylen- oder Cycloalkylidenrest mit 5 bis 20 C-Atomen, z.B. Methylen, Ethylen, Propylen, Isopropylen, Isopropyliden, Butylen, Isobutylen, Amylen, Cyclohexylen, Cyclopentyliden sind;

R kann auch ein Sauerstoffatom, eine Carbonylgruppe, ein Schwefelatom oder eine schwefelhaltige Gruppe, wie eine Sulfoxid- oder eine Sulfongruppe; eine Carbonatgruppe; eine phosphorhaltige Gruppe bedeuten; R kann auch aus zwei oder mehr Alkylen- oder Alkylidengruppen bestehen, die durch solche Gruppen wie aromatische Reste, Sauerstoffatome, Ester- oder Carbonylgruppen, Schwefelatome, Sulfoxid- oder Sulfongruppen oder phosphorhaltige Gruppierungen miteinander verbunden sind. Schliesslich kann R auch ein zweiwertiger Phenolrest, wie der des Bisphenols-A, oder eine Carbonatgruppe sein.

Ar und Ar' sind mono- oder polycarbocyclische aromatische Gruppen mit 6 bis 24 C-Atomen, wie Phenylen, Biphenylen, Terphenylen, Naphthylen.

Y bedeutet organische, anorganische oder metallorganische Reste. Die durch Y repräsentierten Substituenten umfassen Halogen, wie Chlor, Brom, Jod oder Fluor, Hydroxyl- oder Ethergruppen der allgemeinen Formel OE, worin E ein einwertiger Kohlenwasserstoffrest, wie z.B. X ist, oder einwertige Kohlenwasserstoffreste der durch R repräsentierten Art oder andere Substituenten, wie Nitro, Cyan, wobei die genannten Substituenten im wesentlichen inert sind und vorausgesetzt wird, dass mindestens 1 und vorzugsweise 2 Halogenatome pro Arylkern vorhanden sind.

X ist ein einwertiger Kohlenwasserstoffrest mit 1 bis 20 C-Atomen, wobei die folgenden Beispiele genannt seien; Alkyl, wie Methyl, Ethyl, Propyl, Isopropyl, Butyl, Decyl; Aryl, wie Phenyl, Naphthyl, Biphenylyl, Xylyl, Tolyl; Aralkyl, wie Benzyl, Ethylphenyl; einwertige cycloaliphatische Reste, wie Cyclopentyl, Cyclohexyl. Bei Anwesenheit von mehr als einer Gruppierung X können diese Gruppen gleich oder verschieden sein.

Der Buchstabe d in der obigen Formel steht für eine ganze Zahl von 1 bis zum Maximaläquivalent der Zahl der ersetzbaren Wasserstoffe, die an die aromatischen Ringe Ar und Ar' gebunden sind. Der Buchstabe e steht für Null oder eine ganze Zahl von 1 bis zu der Maximalzahl der ersetzbaren Wasserstoffe an R. Die Buchstaben a, b und c stehen für Null oder ganze Zahlen von 1 bis 24. Wenn b nicht Null ist, dann kann weder a noch c Null sein. Sonst können entweder a oder c, aber nicht beide Null sein. Wenn b Null ist, sind die aromatischen Reste durch eine direkte Kohlenstoff-Kohlenstoff-Bindung miteinander verbunden.

Die Hydroxyl- und Y-Substituenten an den aromatischen Resten Ar und Ar' können in ortho-, meta- oder para-Stellung an den aromatischen Ringen stehen und die Reste können jede mögliche Verknüpfung zueinander haben.

In den Rahmen der obigen Formel fallen die folgenden bevorzugten Verbindungen:

2,2-Bis-(3,5-dichlorphenyl)-propan,
Bis-(2-chlorphenyl)-methan,
Bis-(2,6-dibromphenyl)-methan,
1,1-Bis-(4-jodphenyl)-ethan,
1,2-Bis-(2,6-dichlorphenyl)-ethan,
1,1-Bis-(2-chlor-4-jodphenyl)-ethan,
1,1-Bis-(2-chlor-4-methylphenyl)-ethan,
1,1-Bis-(3,5-dichlorphenyl)-ethan,
2,2-Bis-(3-phenyl-4-bromphenyl)-ethan,
2,2-Bis-(4,6-dichlornaphthyl)-propan,
2,2-Bis-(2,6-dichlorphenyl)-pentan,
2,2-Bis-(3,5-dichlorphenyl)-hexan,
Bis-(4-chlorphenyl)-phenylmethan,
Bis-(3,5-dichlorphenyl)-cyclohexylmethan,
Bis-(3-nitro-4-bromphenyl)-methan,
Bis-(4-hydroxi-2,6-dichlor-3-methoxiphenyl)-methan,
2,2-Bis-(3,5-dichlor-4-hydroxiphenyl)-propan,
2,2-Bis-(3-brom-4-hydroxiphenyl)-propan.

In den Rahmen der obigen Strukturformel fallen auch substituierte Benzole, wie vorzugsweise Tetrabrombenzol, Hexachlorbenzol, Hexabrombenzol und Biphenyle, wie 2,2'-Dichlorbiphenyl, 2,4'-Dibrombiphenyl, 2,4'-Dichlorbiphenyl, Hexabrombiphenyl, Octabrombiphenyl, Decabrombiphenyl und halogenierte Diphenylether, die 2 bis 10 Halogenatome enthalten.

Die besonders bevorzugten Halogenverbindungen im Rahmen dieser Erfindung sind die aromatischen Halogenverbindungen, wie chloriertes Benzol, bromiertes Benzol, chloriertes Biphenyl, chloriertes Terphenyl, bromiertes Biphenyl, bromiertes Terphenyl oder eine Verbindung, die zwei Phenylreste enthält, die durch eine zweiwertige Alkylgruppe miteinander verbunden sind und mindestens zwei Chlor- oder Bromatome pro Phenylkern trägt.

Insbesondere bevorzugt sind Hexabrombenzol und bromierte oder chlorierte Biphenyle oder Terphenyle allein oder im Gemisch mit Antimontrioxid.

Im allgemeinen sind die bevorzugten phosphorhaltigen Flammschutzmittel II ausgewählt aus elementarem Phosphor oder organischen Phosphorverbindungen, wie z.B. Phosphonsäuren, Phosphonaten, Phosphinaten, Phosphoniten, Phosphiniten, Phosphinoxiden, Phosphinen, Phosphiten oder Phosphaten.

Beispielhaft für diese Verbindungsklasse ist Triphenylphosphinoxid. Sie können entweder allein oder im Gemisch mit Hexabrombenzol oder einem chlorierten Biphenyl und gegebenenfalls Antimontrioxid verwendet werden.

Typisch für die bevorzugten Phosphorverbindungen, die im Rahmen der vorliegenden Erfindung angewendet werden können, sind solche der Formel

$$QO-\overset{\overset{\displaystyle O}{\|}}{\underset{\underset{\displaystyle OQ}{|}}{P}}-OQ$$

und deren Stickstoffanaloge, worin Q für gleiche oder verschiedene Reste steht, z.B. Kohlenwasserstoffreste mit 1 bis 12 C-Atomen, wie Alkyl, Cycloalkyl, Aryl, Alkyl-substituiertes Aryl und Aryl-substituiertes Alkyl; Halogen, Wasserstoff oder deren Kombinationen, vorausgesetzt, dass mindestens einer der Reste Q ein Arylrest ist. Bevorzugte Beispiele geeigneter Phosphate umfassen die folgenden:

Phenylbisdodecylphosphat, Phenylbisneopentylphosphat, Phenylethylenhydrogenphosphat. Phenyl-bis-(3,5,5'-trimethylhexylphosphat), Ethyldiphenylphosphat, 2-Ethylhexyldi-(p-tolyl)-phosphat, Diphenylhydrogenphosphat, Bis-(2-ethyl-hexyl)-p-tolylphosphat, Tritolylphosphat, Bis-(2-ethylhexyl)-phenylphosphat, Tri-(nonylphenyl)-phosphat, Phenylmethylhydrogenphosphat, Di-(dodecyl)-p-tolylphosphat, Tricresylphosphat, Triphenylphosphat, halogeniertes Triphenylphosphat, Dibutylphenylphosphat, 2-Chlorethyldiphenylphosphat, p-Tolyl-bis-(2,5,5'-trimethylhexyl)-phosphat, 2-Ethylhexyldiphenylphosphat, Diphenylhydrogenphosphat. Die besonders bevorzugten Phosphate sind solche, in denen jeder Rest Q aromatischer Natur ist. Das bevorzugte Phosphat ist Triphenylphosphat. Es wird auch Triphenylphosphat in Kombination mit Hexabrombenzol und gegebenenfalls Antimontrioxid eingesetzt.

Ebenfalls bevorzugt als entflammungshemmende Zusätze sind solche Verbindungen, die Phosphor-Stickstoff-Bindungen enthalten, wie Phosphonitrilchlorid, Phosphoresteramide, Phosphorsäureamide, Phosphonsäureamide, Phosphinsäureamide, Tri-(aziridinyl)-phosphinoxid oder Tetrakis-(hydroximethyl)-phosphoniumchlorid.

Besonders bevorzugte Flammschutzmittel II sind Oligomere eines Carbonats eines halogenierten zweiwertigen Phenols. Die bevorzugten dieser Oligomeren enthalten 2 bis 20 wiederkehrende Einheiten der Formel

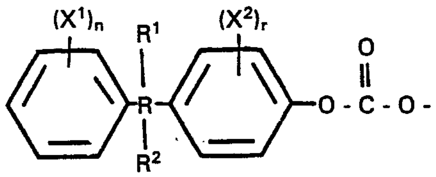

worin

$R^1$ und $R^2$ Wasserstoff, Alkyl mit 1 bis 4 C-Atomen oder Phenyl sind,

$X^1$ und $X^2$ Brom oder Chlor sind und

n und r eine ganze Zahl von 1 bis 4 bedeuten.

Diese oligomeren Zusätze haben bis zu Temperaturen von über 200°C eine geringe Flüchtigkeit sowie einen Erweichungspunkt von weniger als etwa 300°C. Sie können allein oder in Kombination mit synergistisch wirkenden Stoffen, wie anorganischen oder organischen Antimonverbindungen, eingesetzt werden.

Besonders bevorzugte Flammschutzmittel II sind halogenierte organische Verbindungen mit einem Schmelzpunkt über 240°C, die mindestens eine Imidgruppe pro Molekül enthalten, in Kombination mit anorganischen oder organischen Antimonverbindungen. Bevorzugte imidgruppenhaltige Flammschutzmittel II umfassen halogenierte N,N'-Arylen-di-phthalimide, in denen der Arylenrest ein Phenylen-, Diphenylen-, Naphthylenrest oder ein Rest der Formel

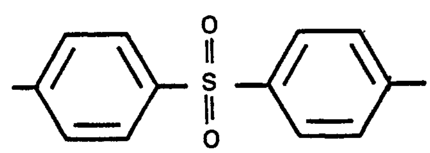

tetrabromierte unsubstituierte und tetrabromierte $C_1$-$C_6$-alkylsubstituierte Phthalimide und Cyclohexyldicarboximide; über einen $C_1$-$C_6$-Alkylen- oder einen $C_6$-$C_{12}$-Alkylenrest verknüpfte N,N'-Bis-(dibromcyclohexandicarboximide) und N,N'-$C_1$-$C_6$-Alkylen-bis-(tetrahalogenphthalimide).

Insbesondere bevorzugte Imide dieser Art entsprechen der Formel

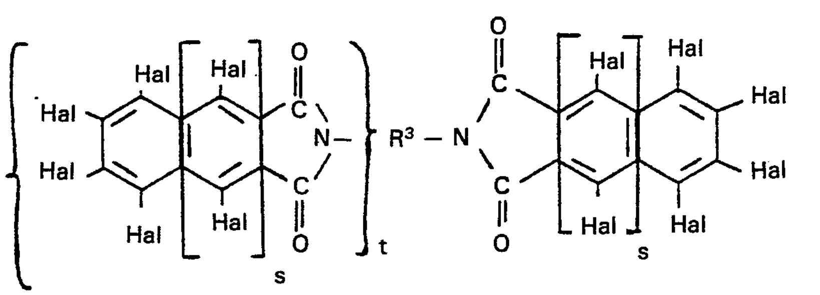

worin

Hal Halogen, insbesondere Chlor oder Brom,

$R^3$ ein $C_1$-$C_6$-Alkyl- oder Alkylenrest, ein Phenyl- oder Phenylenrest, ein Toluyl- oder Toluylenrest, ein Cyclohexyl- oder Cyclohexylenrest, ein Rest der Formel

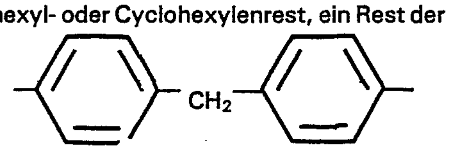

oder

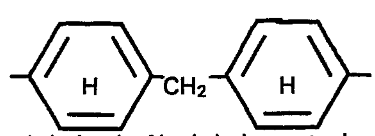

ein Naphthyl- oder Naphthylenrest oder eine Einfachbindung,

s, t Null oder 1 sind.

Die für die vorliegende Erfindung bevorzugten N,N'-$C_1$-$C_6$-Alkylen-bis-(tetrahalogenphthalimide) sowie ein Verfahren zu ihrer Herstellung sind aus der US-PS 4 087 441 bekannt.

Die bevorzugten N,N'-Alkylen-bis-(tetrahalogenphthalimide) entsprechen der obigen Formel, wobei $R^3$ einen $C_2$-$C_6$-Alkylenrest, vorzugsweise einen Ethylenrest,

Hal Chlor, vorzugsweise aber Brom,

s Null und

t 1 bedeuten.

Das bevorzugte N,N'-Alkylen-bis-(tetrahalogenphthalimid) ist N,N'-Ethylen-bis-(tetrabromphthalimid). Die Verwendung dieser Verbindung als Flammschutzmittel für Polyester, z.B. auch PET, ist bekannt (japanische Anmeldung JS-119 041; GB-PS 1 287 934, US-PS 3 624 024, 3 873 567).

Andere bevorzugte Imide umfassen 1,4,5,6-Tetrabrom-2,3-phthalimid, N-Methylol-tetrabromphthalimid, N,N'-Bis-(1,4,5,6-tetrabrom-2,3--phthalimid), N,N'-p-Phenylen-di-tetrachlorphthalimid, 4,4'-Di-tetrachlorphthalimid, N,N'-p-Phenylen-di-tetrabromphthalimid, N,N'-Bis-(5,6-dibrom--cyclohexan-2,3-dicarboximid) und N,N'-1,2-Ethan--bis-(5,6-dibromcyclohexan-2,3-dicarboximid).

Weitere bevorzugte Imide sind aus GB-PS 1 287 934 und US-PS 3 868 388, 3 873 567, 3 915 930, 3 923 734, 4 019 179 und 4 003 862 bekannt.

Die Pfropfpolymerisate III werden durch Polymerisation von olefinisch ungesättigten Monomeren in Gegenwart des Präpolymeren (A) erhalten, wobei ein wesentlicher Teil der Monomeren auf das Präpolymere (A) aufgepfropft wird. Die Herstellung derartiger Pfropfpolymerisate ist im Prinzip bekannt (R.J. Ceresa, Block and Graft Copolymers, Butterworth, London 1962).

Für die Zwecke der Erfindung werden Pfropfpolymerisate III bevorzugt, die kautschukelastische Eigenschaften besitzen und deren Glasübergangstemperatur unterhalb von +10°C, insbesondere zwischen −150 und −20°C, vorzugsweise zwischen −80 und −30°C, liegt. Die Ermittlung der Glasübergangstemperatur kann dabei nach B. Vollmer, Grundriss der Makromolekularen Chemie, Seiten 406-410, Springer-Verlag, Heidelberg, 1962, erfolgen.

Bevorzugtes $C_1$-$C_8$-Alkylacrylat (a) ist n-Butylacrylat.

Bevorzugte Monomere (b) mit mindestens zwei nicht konjugierten Doppelbindungen pro Molekül sind Polyacryl- und Polymethacrylsäureester von mehrwertigen Alkoholen, insbesondere solchen mit 2 bis 8 C-Atomen und 2 bis 4 Hydroxylgruppen, z.B. Butylendiacrylat und -dimethacrylat, Trimethylolpropantrimethacrylat; Di- und Trivinylbenzol, Vinylacrylat und -methacrylat; Alkylester ungesättigter Mono- und Dicarbonsäuren, wie z.B. Alkylacrylat und -methacrylat, Dialkylmaleat, -fumarat und -itaconat, Malein-, Fumar- und Itaconsäuremonoalkylester; Dialkylester von Polycarbonsäuren, die keine polymerisationsfähige Doppelbindung enthalten.

Besonders bevorzugte Monomere (b) sind Butylendiacrylat, Allylmethacrylat und Diallylmaleat.

Bevorzugte weitere Monomere (c) sind Ethylen, Isopren, Vinylether, Butadien, Styrol, Vinylester, Vinylhalogenide, vinylsubstituierte heterocyclische Verbindungen wie Vinylpyrrolidon, Acrylnitril und Mischungen dieser Monomeren.

Bevorzugte olefinisch ungesättigte Monomere zur Herstellung des Anteils (B) sind $C_1$-$C_4$-Alkylacrylate und -methacrylate, Styrol und Acrylnitril. Vorzugsweise enthalten diese zur Herstellung des Anteils (B) verwandten Monomeren mindestens 50 Gew.-% $C_1$-$C_4$-Alkylmethacrylat.

Es ist vorteilhaft, wenn die Pfropfpolymerisate III einen beträchtlichen Gehalt an polaren Gruppen aufweisen. Zweckmässig wählt man Produkte aus, die zu mehr als 10 Gew.-% aus (Meth)-Acrylsäureestern und (Meth)-Acrylnitril aufgebaut sind. Sofern der Gehalt an (Meth)-Acrylestern mehr als 70 Gew.-% beträgt, verzichtet man zweckmässig auf (Meth)-Acrylnitril als Baustein.

Bevorzugte Pfropfpolymerisate III sind solche aus

60-95 Gew.-% Pfropfgrundlage und
40-5 Gew.-% Pfropfauflage, wobei die Pfropfgrundlage aus einem Monomerengemisch enthaltend
95-99,8 Gew.-% Butylacrylat,
0,1-2,5 Gew.-% Butylendiacrylat und
0,1-2,6 Gew.-% Allylmethacrylat oder Diallylmaleat
und die Pfropfauflage zu
60-100 Gew.-% aus Methylmethacrylat und
40-0 Gew.-% anderer Monomerer

erhältlich sind.

Die bevorzugten Pfropfpolymerisate III besitzen einen mittleren Teilchendurchmesser $d_{50}$ [gemessen mittels Ultrazentrifuge nach W. Sholtan, H. Lange, Kolloid. Z. u. Z. Polymere *250*, 782-796 (1972)] von 0,2 bis 0,6, vorzugsweise 0,3 bis 0,5, μm.

Die Herstellung der Präpolymeren und die der Pfropfpolymerisate III erfolgt in üblicher Weise, vorzugsweise durch Emulsionspolymerisation mit üblichen radikalischen Initiatoren, Emulgatoren und Reglern in wässriger Emulsion bzw. Dispersion. Die Herstellung geeigneter Pfropfpolymerisate ist beispielsweise in den deutschen Patentschriften 1 260 135 und 1 238 207 beschrieben.

Besonders bevorzugte Pfropfpolymerisate III lassen sich nach üblichen Emulsionspolymerisationsverfahren in mehreren Stufen aus n-Butylacrylat, 1,3-Butylendiacrylat und Diallylmaleat in erster Stufe und Methylmethacrylat in zweiter Stufe herstellen, wobei das bevorzugte Monomerverhältnis (bezogen auf Gewicht) etwa 79,2/0,4/20,0 beträgt.

Die Pfropfpolymerisate III und ihre Verwendung zur Verbesserung der Schlagzähigkeit von Polyestern einschliesslich PET ist bekannt (US-PS 3 808 180, 4 096 202, DE-AS 2 444 584). Allerdings entfalten die Pfropfpolymerisate ihre Schlagzähigkeits-verbessernde Wirkung in PET erst ab einer relativen Viskosität, die oberhalb der für unser PET I angegebenen Obergrenze liegt. Es hat deshalb für den Fachmann nahegelegen, auf den Zusatz von Pfropfpolymerisat III zu solchem PET zu verzichten, in dem das Pfropfpolymerisat die Schlagzähigkeit nicht verbessert. Es war daher um so überraschender zu finden, dass der Zusatz von Pfropfpolymerisat III zu PET mit einer realtiven Viskosität von 1.28 bis 1.38, das flammwidrig eingestellt ist, das Tropfen im Brandfall verhindert.

Bevorzugte Verstärkungsmittel IV sind Glasfasern. Zusätzlich können den erfindungsgemässen Formmassen aber auch Pigmente, Farbstoffe, Stabilisatoren, Nukleiermittel, UV-Absorber, Gleit- und Entformungsmittel zugesetzt werden.

Das Mischen der Komponenten I-IV und evtl. weiterer Hilfs- und Zusatzstoffe kann auf übliche Weise, z.B. in Knetern oder Ein- bzw. Zweiwellenextrudern, erfolgen.

Die Spritzgussbedingungen für PET-Formmassen sind bekannt; vgl. US-PS 3 516 957 und Ervin J. Rubin, Injection Molding Theory and Praxis, Wiley Interscience, 1972.

In den folgenden Beispielen angegebene Teile bedeuten Gewichtsteile; Prozentangaben beziehen sich auf das Gewicht.

*Beispiele*

Es wurden folgende Materialien eingesetzt:

PET mit einer Intrinsic-Viskosität von 0,54 dl/g, gemessen als 0,5%ige Lösung in Phenol/Tetrachlorethan (Gewichtsverhältnis 1 : 1) bei 25°C;

N,N'-Ethylen-bis-(tetrabromphthalimid) als Bromverbindung der Flammschutzmittelkombination (ETPJ)

ein Pfropfpolymerisat entsprechend Beispiel 26 der US-PS 4 096 202 auf Basis von n-Butylacrylat, 1,3-Butylendiacrylat, Diallylmaleat und Methylmethacrylat («Pfropf»);

Antimontrioxid und Kurzglasfasern. Die Formmassen enthielten Mikrotalk als Nukleiermittel und weniger als 0,3% Stabilisator.

Die Formmassen wurden bei einer Massetemperatur von 250°C verspritzt; die Formtemperatur betrug 100°C.

Prüfstäbe der Abmessungen 127 × 12,7 × 3,2 mm («1/8 Zoll») bzw. 127 × 12,7 × 1,6 mm («1/16 Zoll») wurden nach UL 94 - 5V geprüft, wobei für die Einstufung des Brandverhaltens folgende Kriterien galten:

5 Teststäbe, die im Abstand von 5 sec 5mal für jeweils 5 sec mittels Bunsenbrenner entflammt werden, dürfen

1. keinen Teststab enthalten; der nach dem 5. Entflammen länger als 60 sec weiterbrennt oder -glüht;
2. keinen Teststab enthalten, der tropft, und
3. keinen Teststab enthalten, der in der beflammten Zone merklich zerstört wird.

| | Beispiel 1 (Teile) | Vergleich 1 (Teile) | Beispiel 2 (Teile) | Vergleich 2 (Teile) |
|---|---|---|---|---|
| PET | 6,8 | 9,0 | 4,76 | 5,6 |
| ETPJ | 1,5 | 1,5 | 1,05 | 1,05 |
| $Sb_2O_3$ | 0,5 | 0,5 | 0,35 | 0,35 |
| Pfropf | 1,2 | — | 0,84 | — |
| Glas | — | — | 3,0 | 3,0 |
| UL 94-5V (1/8 Zoll) | bestanden | nicht bestanden: jeder Stab tropfte nach der 5. Entflammung | | |
| UL 94-5V (1/16 Zoll) | | | bestanden | nicht bestanden: jeder Stab tropfte nach der 3. oder 4. Entflammung |

**Patentansprüche**

1. Flammwidrige thermoplastische Polyethylenterephthalat-Formmassen enthaltend

I. 40 bis 95 Gew.-Teile eines Polyethylenterephthalats mit einer relativen Viskosität [gemessen in Phenol/o-Dichlorbenzol (Gewichtsverhältnis 60 : 40) bei 25°C] von 1,28 bis 1,38,

II. 3 bis 20 Gew.-Teile eines Flammschutzmittels,

III. 2 bis 20 Gew.-Teile eines Pfropfpolymerisats aus

(A) 25 bis 95 Gew.-Teilen eines Copolymerisats von

(a) 75 bis 99,8 Gew.-Teilen eines $C_1$-$C_6$-Alkylacrylats,

(b) 0,1 bis 5 Gew.-Teilen eines Monomeren mit mindestens 2 nicht konjugierten olefinischen Doppelbindungen und

(c) 0 bis 40 Gew.-Teilen weiterer Monomerer, als Propfgrundlage und

(B) 75 bis 5 Gew.-Teilen eines durch Polymerisation mindestens eines olefinisch ungesättigten Monomeren

erhaltenen Harzes, das in Gegenwart von (A) hergestellt worden ist, und

IV. 0 bis 300 Gew.-Teile Füll- und/oder Verstärkungsmittel.

2. Formmassen nach Anspruch 1, dadurch gekennzeichnet, dass sie 50 bis 65 Gew.-Teile Komponente I enthalten.

3. Formmassen nach Ansprüchen 1 und 2, dadurch gekennzeichnet, dass sie 5 bis 15 Gew.-Teile Komponente II enthalten.

4. Formmassen nach Ansprüchen 1 - 3, dadurch gekennzeichnet, dass sie als Flammschutzmittel II Imide der Formel

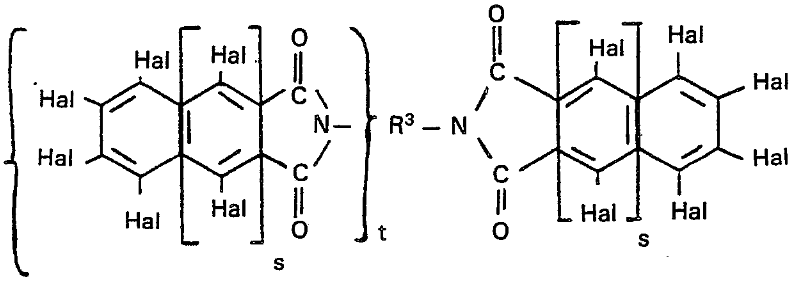

worin

Hal Halogen, insbesondere Chlor oder Brom,

$R^3$ ein $C_1$-$C_6$-Alkyl- oder Alkylenrest, ein Phenyl- oder Phenylenrest, ein Toluyl- oder Toluylenrest, ein Cyclohexyl- oder Cyclohexylenrest,

ein Rest der Formel

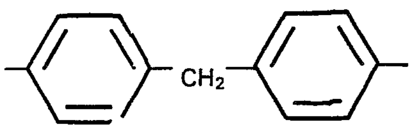

oder

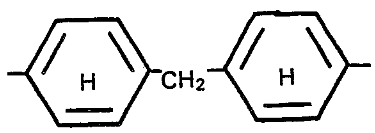

ein Naphthyl- oder Naphthylenrest oder eine Einfachbindung,

s, t Null oder 1 sind,

gegebenenfalls in Kombination mit Antimontrioxid, enthalten.

5. Formmassen nach Ansprüchen 1 - 4, dadurch gekennzeichnet, dass sie als Flammschutzmittel II N,N'-Ethylen-bis-(tetrabromphthalimid), gegebenenfalls in Kombination mit Antimontrioxid, enthalten.

6. Formmassen nach Ansprüchen 1 - 5, dadurch gekennzeichnet, dass sie 5 bis 15 Gew.-Teile Komponente III enthalten.

7. Formmassen nach Ansprüchen 1 - 6, dadurch gekennzeichnet, dass sie als Komponente IV Glasfasern enthalten.

8. Verfahren zur Herstellung der Formmassen nach Ansprüchen 1 - 7 durch Homogenisieren der Komponenten I bis IV in der Schmelze.

9. Verwendung der Formmassen nach Ansprüchen 1 - 7 zur Herstellung von Formkörpern, insbesondere von Spritzgussartikeln.

**Claims**

1. Flame-resistant thermoplastic polyethylene terephthalate moulding compositions containing

I. 40 to 95 parts by weight of a polyethylene terephthalate having a relative viscosity [as measured in phenol/o-dichlorobenzene (ratio by weight 60 : 40) at 25°C] of 1.28 to 1.38,

II. 3 to 20 parts by weight of a flameproofing agent,

III. 2 to 20 parts by weight of a graft polymer of

(A) 25 to 95 parts by weight of a copolymer of

(a) 75 to 99.9 parts by weight of a $C_1$-$C_6$-alkyl acrylate,

(b) 0.1 to 5 parts by weight of a monomer containing at least two unconjugated olefinic double bonds and

(c) 0 to 40 parts by weight of other monomers as the graft base and

(B) 75 to 5 parts by weight of a resin obtained by polymerising at least one olefinically unsaturated monomer, which resin has been prepared in the presence of (A), and

IV. 0 to 300 parts by weight of fillers and/or reinforcing materials.

2. Moulding compositions according to Claim 1, characterised in that they contain 50 to 65 parts by weight of component I.

3. Moulding compositions according to Claims 1 and 2, characterised in that they contain 5 to 15 parts by weight of component II.

4. Moulding compositions according to Claims 1 to 3, characterised in that they contain imides of the formula

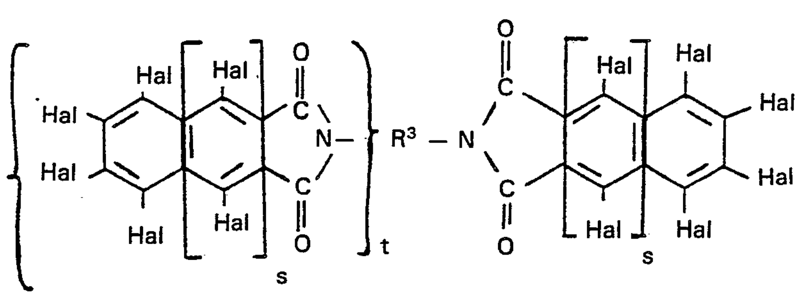

wherein

Hal is halogen, in particular chlorine or bromine,

$R^3$ is a $C_1$-$C_6$-alkyl or alkylene radical, a phenyl or phenylene radical, a toluyl or toluylene radical, a cyclohexyl or cyclohexylene radical, a radical of the formula

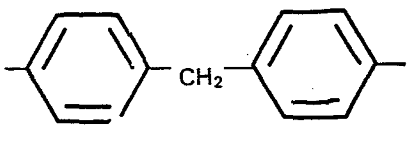

or

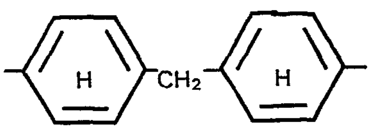

a naphthyl or naphthylene radical or a single bond, and

s and t are zero or 1,

optionally in combination with antimony trioxide, as flameproofing agents II.

5. Moulding compositions according to Claims 1 to 4, characterised in that they contain N,N'-ethylene-bis-(tetrabromophthalimide), optionally in combination with antimony trioxide, as flameproofing agents II.

6. Moulding compositions according to Claims 1 to 5, characterised in that they contain 5 to 15 parts by weight of component III.

7. Moulding compositions according to Claims 1 to 6, characterised in that they contain glass fibres as component IV.

8. Process for producing the moulding compositions according to Claims 1 to 7 by homogenising components I to IV in the melt.

9. Use of the moulding compositions according to Claims 1 to 7 for producing mouldings, particularly injection mouldings.

**Revendications**

1. Matières à mouler thermoplastiques ignifuges à base de téréphtalate de polyéthylène, contenant

I. 40 à 95 parties en poids d'un téréphtalate de polyéthylène à une viscosité relative (mesurée dans le mélange phénol/o-dichlorobenzène à un rapport en poids de 60 : 40 à 25°C) de 1,28 à 1,38,

II. 3 à 20 parties en poids d'un agent ignifugeant,

III. 2 à 20 parties en poids d'un polymère greffé de

(A) 25 à 95 parties en poids d'un copolymère de

(a) 75 à 99,8 parties en poids d'un acrylate d'alkyle en $C_1$-$C_6$,

(b) 0,1 à 5 parties en poids d'un monomère contenant au moins deux doubles liaisons oléfiniques non conjuguées et

(c) 0 à 40 parties en poids d'autres monomères, en tant que support de greffage et

(B) 75 à 5 parties en poids d'une résine obtenue par polymérisation d'au moins un monomère à insaturation oléfinique, qui a été préparée en présence de (A), et

IV. 0 à 300 parties en poids de matières de charge et/ou renforçantes.

2. Matières à mouler selon la revendication 1, caractétisées en ce qu'elles contiennent de 50 à 65 parties en poids du composant I.

3. Matières à mouler selon les revendications 1 et 2, caractérisées en ce qu'elles contiennent de 5 à 15 parties en poids du composant II.

4. Matières à mouler selon les revendications 1 à 3, caractérisées en ce qu'elles contiennent en tant qu'agent ignifugeant II des imides de formule

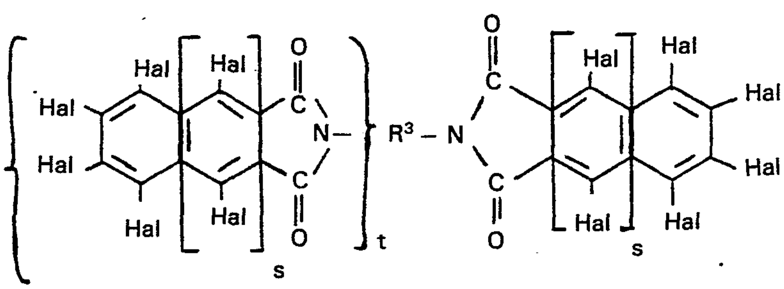

dans laquelle

Hal représente un halogène, en particulier le chlore ou le brome,

$R^3$ représente un groupe alkyle en $C_1$-$C_6$ ou alkylène, un reste phényle ou phénylène, un reste toluyle ou toluylène, un reste cyclohexyle ou cyclohexylène, un reste de formule

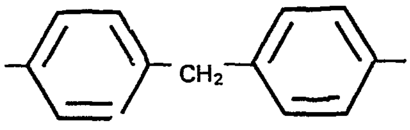

ou

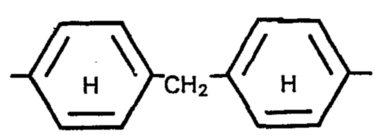

un reste naphtyle ou naphtylène ou une liaison simple,

s, t sont égaux à 0 ou 1,

éventuellement en combinaison avec du trioxyde d'antimoine.

5. Matières à mouler selon les revendications 1 à 4, caractérisées en ce qu'elles contiennent en tant qu'agent ignifugeant II du N,N'-éthylène-bis-(tetra-

bromophtalimide) éventuellement en combinaison avec du trioxyde d'antimoine.

6. Matières à mouler selon les revendications 1 à 5, caractérisées en ce qu'elles contiennent de 5 à 15 parties en poids du composant III.

7. Matières à mouler selon les revendications 1 à 6, caractérisées en ce qu'elles contiennent en tant que composant IV des fibres de verre.

8. Procédé de préparation des matières à mouler selon les revendications 1 à 7 par homogénéisation des composants I à IV à l'état fondu.

9. Utilisation des matières à mouler selon les revendications 1 à 7 pour la fabrication d'objets moulés, en particulier d'articles moulés par injection.